# EUROPEAN PATENT APPLICATION

(11) **EP 2 284 666 A2**
(43) Date of publication of application: **16.02.2011**
(21) Application number: 10169968.4
(22) Date of filing: 19.07.2010
(51) Int. Cl.: G06F 3/042

(54) **Touch panel and display device with touch panel**

(30) Priority: 03.08.2009 JP 2009180412
(71) Applicant: Nitto Denko Corporation, Ibaraki-shi Osaka 567-8680 (JP)
(72) Inventor: Juni, Noriyuki, Osaka 567-8680 (JP)
(74) Representative: HOFFMANN EITLE

(57) **Abstract**

There is provided a touch panel (10) including a coordinate input region composed of a double-layered structure which comprises: an input selective region (11) and an input-determining region (12). The input selective region (11) is included in a first optical detector (13) for emitting lattice emitting light (16). The input-determining region (12) is included in a second optical detector (14) for emitting parallel emitting light (19). When an input tool (21) blocks the lattice emitting light (16) alone in the input selective region (11), the position of the input tool (21) is selected. When the input tool (21) further blocks the parallel emitting light (19) in the input-determining region (12), the position of the input tool (21) is determined.

## Description

### TECHNICAL FIELD OF THE INVENTION

The present invention relates to a touch panel, more particularly relates to an optical touch panel.

### BACKGROUND ART

Conventionally, touch panels with double-layered structure where optical detecting means and pressure-type detecting means are overlaid are known (Japanese Unexamined Patent Publication No. 2009-072232 A). In such a touch panel, the optical detecting means is located on an upper side (the side close to the operator) and pressure-type detecting means is located on a lower side (the side far from the operator).

In the first step, light beams of an optical detecting means are blocked with a finger to select a position. Next, in the second step, a pressure-type surface is pushed in with a finger as it is and a pressure-type detecting means is pressed by a finger to determine an input. This operation makes it possible to successively perform selective/input operations while preventing incorrect inputting caused by a touch of a finger or a sleeve.

However, the aforementioned conventional touch panel employs a pressure-type detecting means, so that a transparent conductive film should be arranged on a surface of a coordinate input region. The transparent conductive film has low optical transparency and is poor in scratch resistance. Accordingly, the conventional touch panel has such problems that visibility of the coordinate input region is deteriorated and durability is lowered.

It is therefore an object of the present invention to provide a touch panel free from deterioration in visibility and durability caused by a transparent conductive film placed on a coordinate input region.

### SUMMARY OF THE INVENTION

According to the present invention, there is provided a touch panel including a coordinate input region composed of a double-layered structure which comprises: an input selective region; and an input-determining region. The input selective region is included in a first optical detecting means and the input-determining region is included in a second optical detecting means. The first optical detecting means comprises: a first light-emitting section for emitting lattice emitting light to cross the input selective region; and a first light-receiving section for receiving the lattice emitting light. The second optical detecting means comprises: a second light-emitting section for emitting parallel emitting light to cross the input-determining region; and a second light-receiving section for receiving the parallel emitting light. The input selective region is located on an upper side (the side close to the operator). And the input-determining region is located on a lower side (the side far from the operator). When an input means blocks the lattice emitting light alone in the input selective region, the position of the input means is selected. When the input means further blocks the parallel emitting light in the input-determining region, the position of the input means is determined.

In preferred embodiments of the touch panel according to the present invention, the difference between the height of the lattice emitting light and the height of the parallel emitting light is 1 to 20 mm.

According to the present invention, there is also provided a display device with a touch panel according to the present invention is made by the combination of the aforementioned touch panel and a display means for displaying a selected item in the coordinate input region.

A display device with a touch panel to be used in the present invention makes the user possible to make a selection while visually confirming a selected item. It is possible to determine the selective item simply by pushing an input means into an input-determining region at the time when a suitable item is selected. This enables the user to successively perform selective/input operations while preventing incorrect input caused by a touch of a finger or a sleeve.

Further, since there is no need to place a transparent conductive film on a surface of a region where coordinate input is done in the touch panel of the present invention, visibility of the display device is not deteriorated and its durability is high.

### BRIEF DESCRIPTION OF THE DRAWINGS

For a full understanding of the present invention, reference should now be made to the following detailed description of the preferred embodiments of the invention as illustrated in the accompanying drawings.
FIG. 1 (a) is a schematic view of a touch panel of the present invention (input selective step);
FIG. 1 (b) is a schematic view of a touch panel of the present invention (input-determining step);
FIG. 2 is a schematic view of a display device with a touch panel of the present invention;
FIG. 3 is a schematic view of a touch panel of the present invention;
FIG. 4 is a cross-sectional view of the display device with a touch panel of the present invention;
FIG. 5 is an example of a selected item of the display device with an optical touch panel of the present invention;
FIG. 6 is a configuration diagram of the display device with a touch panel of the present invention;
FIG. 7 (a) and 7 (b) are respectively a schematic view of light intensity distribution that has reached light-receiving elements.

### DETAILED DESCRIPTION

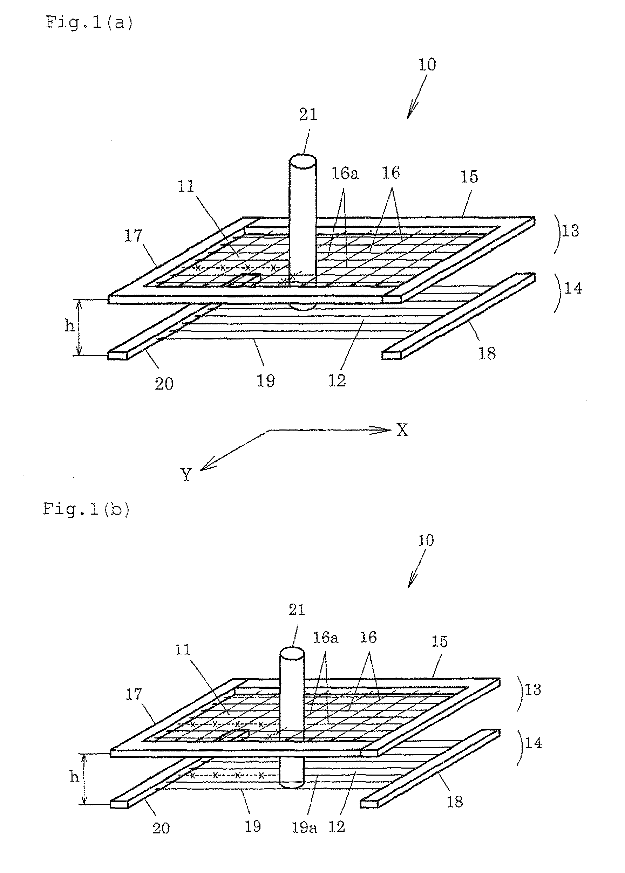

The preferred embodiments of the present invention will now be described with reference to FIGs. 1-7 of the drawings. Identical elements in the various figures are designated with the same reference numerals.

### [Touch Panel]

As shown in FIG. 1 (a) and 1 (b), in a touch panel 10 being an embodiment of the present invention, a coordinate input region is a double-layered structure which comprises: an input selective region 11; and an input-determining region 12. The input selective region 11 is located on an upper side (the side close to the operator). And the input-determining region 12 is located on a lower side (the side far from the operator). The input selective region 11 is included in a first optical detecting means 13 and the input-determining region 12 is included in a second optical detecting means 14.

In the first optical detecting means 13, X and Y-directional lattice emitting light 16 emitted from an L-shaped first light-emitting section 15 crosses the input selective region 11 in X and Y directions to be incident on an L-shaped first light-receiving section 17.

In the second optical detecting means 14, X-directional (unidirectional) parallel emitting light 19 emitted from an I-shaped second light-emitting section 18 crosses the input-determining region 12 in the X direction to be incident on an I-shaped light-receiving section 20.

In the first step, as shown in FIG. 1 (a), an input means (a finger or a pen) 21 is shallowly pushed into the input selective region 11 to block a portion of emitting light 16a of the lattice emitting light 16. Accordingly, the blocked emitting light 16a is not incident on the first light-receiving section 17. This is detected and then X and Y coordinates of the input means 21 in the input selective region 11 are detected. Although the position of the input means 21 is selected, the position is not determined in the first step.

Next, as shown in FIG. 1 (b), the input means 21 is further deeply pushed into the input-determining region 12 to block a portion of emitting light 19a of the parallel emitting light 19 in the input-determining region 12. Accordingly, the blocked emitting light 19a is not incident on the second light-receiving section 20. After that is detected, it is detected that the input means 21 has reached the input-determining region 12. At this time, an input is determined. It is not necessary for the X and Y coordinates in the input means 21 to be detected in the input-determining region 12.

The difference h between the height of the lattice emitting light 16 in the input selective region 11 and the height of the parallel emitting light 19 in the input-determining region 12 is a travel distance of the input means 21 from the selection of input to the determination of input. Such a height difference h is preferably 1 to 20 mm to obtain a touch panel superior in operational feeling.

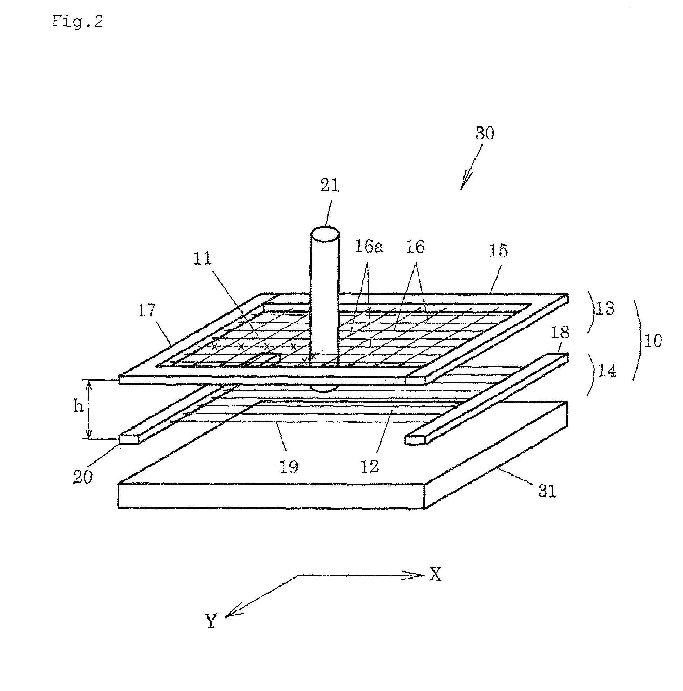

As shown in FIG. 2, the touch panel 10 being an embodiment of the present invention is preferably used as a display device 30 with a touch panel in combination with a display means 31 (typically, a liquid crystal display panel). In the display device 30 with a touch panel, a blocking signal detected by the first optical detecting means 13 is used to select any one of a plurality of selected items displayed on the display means 31. A blocking signal detected by the second optical detecting means 14 is used to determine a selected item.

The display device 30 having the touch panel 10 being an embodiment of the present invention is capable of switching the highlighting (color modification or framing) and the like of the selected item by working with the movement of the input means 21 in the X and Y directions. Accordingly, it is possible for the user to make a selection while visually confirming the selected item.

It is possible for the user to determine the selected item simply by pushing the input means 21 into the input-determining region 12 at the time when a suitable item is selected. This method makes it possible to successively perform selective/input operations while preventing incorrect inputting caused by a touch of a finger or a sleeve.

Since there is no need to place a transparent conductive film on a surface of a region where coordinate input is done in the touch panel 10 of the present invention, visibility of the display means 31 is not deteriorated and its durability is high.

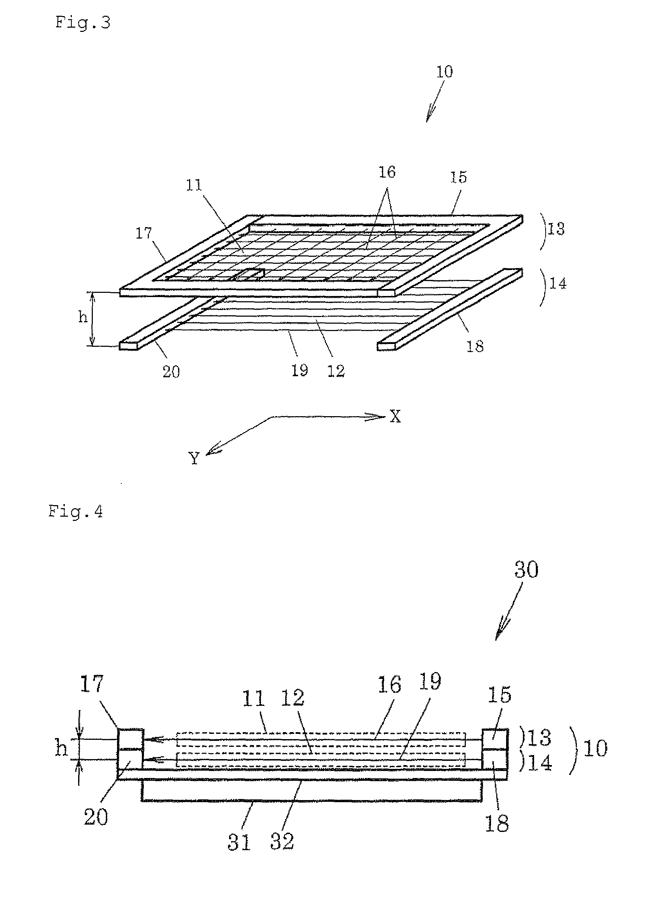

As shown in FIG. 3, in the touch panel 10 to be used in the present invention, a region where coordinate input is provided is composed of a double-layered structure which comprises: the input selective region 11 and the input-determining region 12. The input selective region 11 is located on the front side (the side close to the operator) and the input-determining region 12 is located on the rear side (the side far from the operator). The input selective region 11 is included in the first optical detecting means 13. And the input-determining region 12 is included in the second optical detecting means 14.

In the first step, the input means (a finger or a pen) 21 is shallowly pushed into the input selective region 11 to block a portion of the emitting light 16a of the lattice emitting light 16. This makes it possible to detect the X and Y coordinates of the input means 21 in the input selective region 11. Although the position of the input means 21 is selected at this stage, the position is not determined.

In the second step, the input means 21 is further deeply pushed into the input-determining region 12 to block a portion of the emitting light 19a of the parallel emitting light 19. This makes it possible to detect that the input means 21 has reached the input-determining region 12. Input is determined at this stage. It is not necessary for the X and Y coordinates in the input means 21 to be detected in the input-determining region 12.

In a preferred embodiment of the display device 30 with a touch panel to be used in the present invention, as shown in FIG. 4, the touch panel 10 of the present invention is arranged on the display means (typically, a liquid crystal panel) 31. A transparent substrate 32 may be arranged on the surface of the display means 31 to improve scratch resistance. Unlike the transparent conductive film, the transparent substrate 32 has, however, high transparency, so that visibility of the display means 31 is little deteriorated.

The display means 31 is used for displaying a plurality of selected items within the input selective region 11. The user usually selects one of the plurality of selected items displayed within the input selective region 11 using a finger or a pen as the input means 21.

### [Coordinate Input Region]

In the present invention, the term "coordinate input region" refers to a region where the coordinates of the input position are selected and determined by the input device 21, such as a finger or a pen.

In the touch panel 10 being an embodiment of the present invention, the coordinate input region is composed of a double-layered structure which comprises: the input selective region 11; and the input-determining region 12. The input selective region 11 is included in the first optical detecting means 13. And the input-determining region 12 is included in the second optical detecting means 14.

In the first optical detecting means 13, the X and Y-directional lattice emitting light 16 emitted from the L-shaped first light-emitting section 15 crosses the input selective region 11 to be incident on the L-shaped first light-receiving section 17.

In the second optical detecting means 14, the X-directional (unidirectional) parallel emitting light 19 emitted from the I-shaped second light-emitting section 18 crosses the input-determining region 12 to be incident on the I-shaped second light-receiving section 20.

In the touch panel 10 of the present invention, the first light-emitting section 15, the first light-receiving section 17, the second light-emitting section 18, and the second light-receiving section 20 arranged in the vicinity of the touch panel 10 function as sensors. Accordingly, there is no need to place a transparent conductive film in the coordinate input region. The transparent conductive film has low scratch resistance (typically, keystroke life 10 million times) and low transparency (typically, optical transmittance: 78%).

The coordinate input region may be basically an open space (optical transmittance: 100%). To provide the user with a touch feeling or to protect the display from scratches, the transparent substrate 32 (a glass panel or an acrylic panel) having high transparency (optical transmittance of 90% or higher) may be arranged on the bottom.

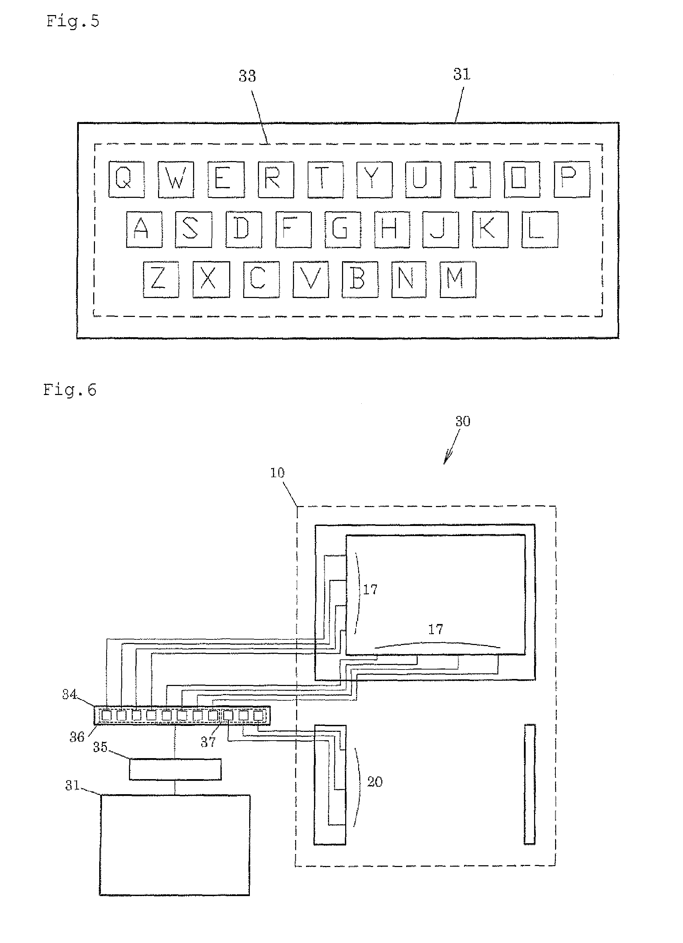

The selected item displayed on the display means 31 in the coordinate input region is typically, a key board 33 as shown in FIG. 5. When the user selects a key "A" by the operation in the first step, the user is able to visually confirm that the key "A" has been selected by displaying the colored key "A".

When the key "A" is determined by the operation in the second step, the user is able to visually confirm that the key "A" has been determined by displaying the key "A" in other color or displaying by blinking.

The selected item displayed by the display means 31 in the coordinate input region is not particularly limited, but is determined appropriately according to the uses, such as Bank ATM and ticket machines or the like.

### [First optical detecting means]

The first optical detecting means 13 has the first light-emitting section 15 and the first light-receiving section 17. The X and Y-directional lattice emitting light 16 is emitted from the first light-emitting section 15 to cross the input selective region 11 in the X and Y directions to be incident on the first light-receiving section 17.

In the first step (FIG. 1 (a)), the input means (a finger or a pen) 21 is shallowly pushed into the input selective region 11 to detect the blocking signal from the first light-receiving section 17 when a portion of the emitting light 16a of the lattice emitting light 16 in the input selective region 11 is blocked.

Any light-emitting section may be used as the light-emitting section 15 as long as it can generates the X and Y-directional lattice emitting light 16 in the coordinate input region. The first light-emitting section 15 is preferably formed in an L shape on two sides adjacent to each other in the input selective region 11. The first light-emitting section 15 is preferably formed by the arrangement of a plurality of light-emitting elements or by the arrangement of an optical waveguide (light-emitting sided-optical waveguide) connected to a light-emitting element.

The light-emitting element is preferably a light-emitting diode or a semiconductor laser, more preferably a VCSEL (Vertical Cavity Surface Emitting Laser). The wavelength of light emitted from the light-emitting element is preferably within a near-infrared region (700 to 2,500 nm).

The first light-receiving section 17 receives light beams which have crossed the input selective region 11 (light-receiving sided-optical waveguide). The first light-receiving sided-optical waveguide for forming the first light-receiving section 17 preferably includes a plurality of cores and a cladding layer where the cores are embedded.

The cores are formed of a material having a refractive index higher than that of the cladding layer. Further, the cores are formed of a material with high transparency at a wavelength of light to propagate. The material for forming the cores is preferably a UV curable resin having excellent patterning properties. Typically, the cores respectively have a width of 10 to 500 µm. The height of the cores is typically 10 to 100 µm.

The cladding layer is formed of a material having a refractive index lower than that of the cores. The maximum refractive index difference between the cores and the cladding layer is preferably at least 0.01 and more preferably 0.02 to 0.2. The material for forming the cladding layer is preferably a thermosetting resin or a UV curable resin.

The number of the cores is determined as appropriate according to the size and the resolution of the touch panel. For example, the number of the cores is preferably 50 to 500 when the touch panel has opposite angles of 10.4 inches.

### [Second Optical Detecting Means]

The second optical detecting means 14 has the second light-emitting section 18 and the second light-receiving section 20. The X-directional (unidirectional) parallel emitting light 19 is emitted from the second light-emitting section 18 and then crosses the input-determining region 12 in the X direction to be incident on the second light-receiving section 20.

In the second step (FIG. 1 (b)), the input means 21 is further deeply pushed into the input-determining region 12 to detect the blocking signal by the second light-receiving section 20 when a portion of the emitting light 19a of the parallel emitting light 19 in the input-determining region 12 is blocked.

Any light-emitting section may be used as the light-emitting section 18 as long as it generates X-directional parallel emitting light 19. The second light-emitting section 18 is preferably formed in an I shape on one side of the input-determining region 12. The second light-emitting section 18 is preferably formed by the arrangement of a plurality of light-emitting elements or by the arrangement of an optical waveguide (light-emitting-sided optical waveguide) connected to a light-emitting element.

The light-emitting element is preferably a light-emitting diode or a semiconductor laser, more preferably a VCSEL (Vertical Cavity Surface Emitting Laser). The wavelength of light emitted from the light-emitting element is preferably within the near-infrared region (700 to 2,500 nm) .

The second light-receiving section 20 receives light beams which have crossed the input-determining region (light-receiving sided-optical waveguide) 12. The light-receiving sided-optical waveguide for forming the second light-receiving section 20 preferably includes a plurality of cores and a cladding layer where the cores are embedded.

Unlike the light-receiving sided-optical waveguide for forming the first light-receiving section 17, the light-receiving sided-optical waveguide for forming the second light-receiving section 20 does not need to detect the X and Y coordinates in the input means 21. Since the light-receiving sided-optical waveguide for forming the second light-receiving section 20 may simply detect the blocking signal by the input means 21, the number of the cores may be fewer than that of the light-receiving sided-optical waveguide for forming the first light-receiving section 17. For example, in the case of a touch panel having opposition angles of 10.4 inches, the number of the cores in the light-receiving-sided optical waveguide for forming the second light-receiving section 20 is preferably 25 to 250.

### [Display Device with touch panel]

In a preferred embodiment, the touch panel 10 to be used in the present invention is combined with the display means 31 to be used as the display device 30 with a touch panel. As shown in FIG. 6, the display device 30 with a touch panel comprises: the touch panel 10 of the present invention; a light-receiving element 34 for detecting intensity of light received at a first light-receiving section 17 and a second light-receiving section 20 of the touch panel 10; a processing circuit 35 for processing a blocking signal of the light-receiving element 34; and the display means 31 for displaying information based on the position information by being recognized with the processing circuit 35.

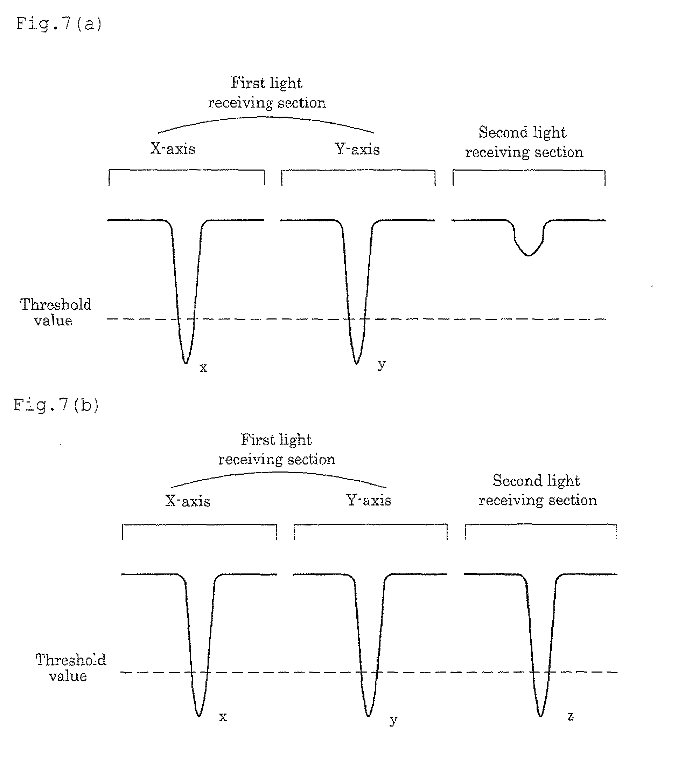

FIG. 7 shows light intensity distribution that has reached the light-receiving element 34 at the time when the input means (a finger or a pen) 21 blocks the lattice emitting light 16 emitted from the first light-emitting section 15 in the display device 30 with a touch panel of the present invention (FIG. 7 (a)) or at the time when the input means 21 blocks the parallel emitting light 19 emitted from the second light-emitting section 18 in the display device 30 with a touch panel of the present invention (FIG. 7 (b)).

As shown in FIG. 7 (a), when the input means (a finger or a pen) 21 blocks the lattice emitting light 16 emitted from the first light-emitting section 15, blocking signals (x, y) are obtained from pixels 36 connected to the first light-receiving section 17 to recognize the coordinates of the input means 21.

As shown in FIG. 7 (b), when the input means (a finger or a pen) 21 blocks the parallel emitting light 19 emitted from the second light-emitting section 18, a blocking signal (z) is obtained from the pixels 37 connected to the second light-receiving section 20 in the light-receiving element 34 and then it is recognized that the input means 21 has reached the input-determining region 12.

As shown in FIG. 7 (a), in the display devise 30 with a touch panel of the present invention, the position of the input means 21 is selected when the blocking signals (x, y) are below the threshold value (first step). Further, as shown in FIG. 7 (b), the position of the input means 21 is determined when the blocking signal (z) is below the threshold value (second step).

The light-receiving element 34 to be used in the present invention converts an optical signal to an electrical signal to detect the intensity of light received at the first light-receiving section 17 and the second light-receiving section 20. Examples of such a light-receiving element 34 includes a Complementary Metal-Oxide Semiconductor (CMOS) image sensor or a Charge Coupled Device (CCD) image sensor.

The number of the light-receiving elements 34 to be used for the display device 30 with a touch panel of the present invention is preferably 1 to 4. As shown in FIG. 6, an optical waveguide connected to the first light-receiving section 17 and the second light-receiving section 20 is further preferably connected to one light-receiving element 34 by using a linear image sensor where a plurality of pixels 36, 37 are aligned as the light-receiving element 34. This makes it possible to reduce the number of the light-receiving elements 34 to one, which is expensive, resulting in cost containment for the display device 30 with a touch panel.

The processing circuit 35 processes blocking signals of the light-receiving element 34. More specifically, the first processing is to transmit information indicating that a certain item has been selected to the display means 31 by the blocking signals detected by the first optical detecting means 13.

The second processing is to transmit information indicating that the selected item has been determined to the display means 31 by the blocking signals detected by the second optical detecting means 14.

Examples of the processing circuit 35 include a Central Processing Unit (CPU) and a Field Programmable Gate Array (FPGA).

The display means 31 displays information based on the coordinates recognized by the processing circuit 35. The display means 31 is not particularly limited as long as it can display characters and figures. A liquid crystal display and a plasma display are typically used as the display means 31.

While the present invention has been described so far based on preferred embodiments, it is to be understood that the touch panel and the display device with a touch panel of the present invention are not limited to the configuration of the aforementioned preferred embodiments.

### INDUSTRIAL APPLICABILITY

While the applications of the touch panel and the display device with a touch panel of the present invention are not particularly limited, examples of the applications of the touch panel and the display device with a touch panel of the present invention include apparatuses having a high load used by a large indefinite number of users, such as bank ATM systems, railway ticket-vending machines, shop POS systems, search terminals in libraries, operation panels of copiers and production facilities or the like.

## Claims

1. A touch panel (10) comprising a coordinate input region composed of a double-layered structure comprising:
an input selective region (11): and
an input-determining region (12),
wherein the input selective region (11) is included in a first optical detecting means (13) and the input-determining region (12) is included in a second optical detecting means (14),
wherein the first optical detecting means (13) comprises: a first light-emitting section (15) for emitting lattice emitting light (16) to cross the input selective region (11); and a first light-receiving section (17) for receiving the lattice emitting light (16), the second optical detecting means (14) comprises: a second light-emitting section (18) for emitting parallel emitting light (19) to cross the input-determining region (12); and a second light-receiving section (20) for receiving the parallel emitting light (19),
wherein the input selective region (11) is located on an upper side and the input-determining region (12) is located on a lower side,
wherein the position of an input means (21) is selected when the input means (21) blocks the lattice emitting light (16) in the input selective region (11), the position of an input means (21) is determined when the input means (21) blocks the parallel emitting light (19) in the input-determining region (12).

2. The touch panel (10) according to claim 1, wherein the difference between the height of the lattice emitting light (16) and the height of the parallel emitting light (19) is 1 to 20 mm.

3. A display device (30) with a touch panel made by the combination of the touch panel (10) according to claim 1 or claim 2 and a display means (31) for displaying a selected item in the coordinate input region.
